# FASCICULE DE BREVET EUROPEEN

(11) **EP 1 099 629 B1**
(45) Date de publication et mention de la délivrance du brevet: **13.07.2005**
(21) Numéro de dépôt: 00403073.0
(22) Date de dépôt: 07.11.2000
(51) Int. Cl.: B64D 29/06, E05F 7/00, E05C 17/02, E05C 21/00, B64D 29/08, E05B 41/00

(54) **Capots de nacelle d'un moteur d'avion comprenant un indicateur de défaut de fermeture**
Verkleidung einer Flugzeugtriebwerkgondel mit Verschlussfehleranzeiger
Aircraft engine cowl panels including a seal default display

(30) Priorité: 10.11.1999 FR 9914121
(43) Date de publication de la demande: 16.05.2001
(73) Titulaire: AIRBUS France, 31060 Toulouse (FR)
(72) Inventeur: De Carvalho, Eric, 31170 Tournefeuille (FR); Delmas, Eric, 31490 Brax (FR)
(74) Mandataire: Poulin, Gérard

(56) Documents cités:
- GB-A- 2 267 122
- US-A- 4 150 802
- US-A- 4 613 099
- US-A- 4 679 750

## Description

### Domaine technique

L'invention concerne les nacelles de moteurs d'avion équipées d'un indicateur de défaut de fermeture de moyens de verrouillage interposés entre deux éléments aptes à occuper, l'un par rapport à l'autre, une position ouverte et une position fermée.

Un tel indicateur peut notamment être utilisé sur un moteur d'avion, pour informer immédiatement le personnel au sol d'un défaut de fermeture des moyens de verrouillage qui sont interposés entre des capots de la nacelle dudit moteur.

### Etat de la technique

Les nacelles des moteurs d'avion sont habituellement équipées de capots, dont l'ouverture permet d'accéder, lorsque l'avion est au sol, à différents équipements, systèmes, etc., pour en assurer la maintenance. Lorsque l'avion est en vol, les capots sont fermés et présentent une forme telle qu'ils assurent la continuité aérodynamique du moteur dans son ensemble.

De façon plus précise, la nacelle d'un turboréacteur à double flux est généralement équipée d'au moins une paire de capots, respectivement de droite et de gauche, placés autour de la soufflante du moteur. Chacun des capots présente en section approximativement la forme d'un C selon un plan transversal perpendiculaire à l'axe longitudinal du moteur. Une charnière permet d'articuler le bord supérieur de chacun des capots sur la partie haute du moteur. Grâce à cet agencement, il est possible d'accéder aux différents équipements du moteur, notamment pour en effectuer la maintenance, en relevant les capots.

Par ailleurs, les bords inférieurs des capots sont équipés de mécanismes de verrouillage prévus pour verrouiller les capots dans leur position fermée lorsque ces mécanismes sont actionnés. Ces mécanismes de verrouillage comportent généralement une partie mâle et une partie femelle montées sur les bords inférieurs respectifs des capots, de façon à pouvoir coopérer entre elles lorsque les capots sont fermés.

Le document US-A-4 531 769 concerne un mécanisme de verrouillage perfectionné prévu pour assurer la fermeture de deux capots entourant un moteur d'avion. Ce mécanisme, du type à genouillère, comprend un crochet principal articulé sur le bord inférieur d'un premier capot, de façon à pouvoir pénétrer dans une ouverture complémentaire liée à l'autre capot. La position du crochet principal est sécurisée par l'utilisation d'un deuxième crochet. Le verrouillage du mécanisme est commandé en appuyant sur une poignée.

Lorsqu'un tel mécanisme de verrouillage est implanté sur un moteur d'avion, il peut arriver que l'opérateur chargé de fermer les capots oublie d'effectuer le verrouillage ou que celui-ci soit mal réalisé. En effet, lorsqu'un mécanisme de verrouillage tel que celui qui est décrit dans le document US-A-4 531 769 est utilisé, il est possible d'actionner la poignée dans le sens de la fermeture alors que le crochet n'est pas engagé dans l'ouverture complémentaire liée à l'autre capot. Dans ce cas, comme dans l'hypothèse où l'opérateur oublierait de manoeuvrer les mécanismes de verrouillage après avoir abaissé les capots, il n'est pratiquement pas possible de voir que le verrouillage a été omis ou imparfaitement exécuté. En effet, du fait de leur masse élevée, les capots se mettent automatiquement en place par gravité et leurs bords inférieurs ne dépassent pratiquement pas de l'entrée d'air. De plus, les mécanismes de verrouillage existants ne possèdent actuellement pas de parties réellement saillantes permettant d'indiquer à l'opérateur un défaut de fermeture.

Dans le document EP-A-0 596 070, ce problème a été résolu en montant sur le bord inférieur de l'un des deux capots un bras pivotant ou coulissant qui pend de manière visible sous le moteur lorsque les deux capots sont abaissés mais non verrouillés. L'indication d'un défaut de fermeture peut encore être améliorée en ajoutant un fanion à l'extrémité du bras pivotant ou coulissant.

Selon ce document EP-A-0 596 070, le verrouillage des capots ne peut être effectué qu'après que l'opérateur ait remonté manuellement le bras afin de le loger sur un réceptacle prévu à cet effet. Lorsque le verrouillage est effectué, une broche liée au capot opposé pénètre dans le bras pour le maintenir dans sa position escamotée. Lorsque les capots sont déverrouillés, un ressort amène automatiquement le bras dans sa position en saillie, visible de l'extérieur.

La présence d'un tel indicateur sous les capots équipant un moteur d'avion empêche un actionnement défectueux ou inexistant des mécanismes de verrouillage. Toutefois, cet indicateur présente un certain nombre d'inconvénients.

En premier lieu, dans le cas le plus fréquent où le moteur est installé sous l'aile de l'avion, le mécanisme de verrouillage des capots est situé sous le moteur, dans un endroit très proche du sol et donc d'accès malaisé. Lorsque l'opérateur ouvre ou referme les capots, il doit s'accroupir pour manoeuvrer les mécanismes de verrouillage. Le bras ajouté au mécanisme de verrouillage selon le document EP-A-0 596 070 constitue alors une pièce saillante qui vient s'ajouter à d'autres parties contondantes du moteur risquant de blesser l'opérateur.

De plus, lorsqu'on referme les capots, l'indicateur décrit dans le document EP-A-0 596 070 impose à l'opérateur de remonter le bras tout en verrouillant les capots. Dans la position dans laquelle il se trouve, cette opération est particulièrement fastidieuse et difficile à réaliser.

En outre, l'indicateur décrit dans le document EP-A-0 596 070 complique sensiblement les mécanismes de verrouillage existants puisqu'il nécessite l'ajout de deux pièces distinctes sur les deux capots, ainsi qu'un alignement entre la broche assurant le blocage du bras en position escamotée et le trou formé dans le bras pour recevoir cette broche. Cette opération peut se révéler fastidieuse, compte tenu de l'usure et du jeu que prendront les pièces lors de leur utilisation.

Le document US-A-4 613 099 décrit une nacelle de moteur d'avion conforme au préambule de la revendication 1 et comprenant un indicateur de verrouillage, prévu pour empêcher la fermeture complète des capots d'un moteur d'avion tant qu'un verrou interne n'est pas correctement actionné et pour fournir une indication visuelle de cet état non verrouillé. Le verrou interne est prévu entre les extrémités adjacentes de deux capots internes du moteur et l'indicateur de verrouillage est intégré à ces capots internes et empêche la fermeture complète des capots externes, tant que le verrou interne n'est pas verrouillé. Un ressort escamote l'indicateur dès que le verrouillage est réalisé. Pour obtenir le déverrouillage, on doit agir sur une tirette de l'indicateur.

### Exposé de l'invention

L'invention a précisément pour objet un indicateur de défaut de fermeture assurant une visualisation efficace d'un tel défaut, tout en remédiant aux inconvénients de l'indicateur décrit dans le document EP-A-0 596 070, c'est-à-dire notamment en ne compliquant pas la fabrication ni la mise en oeuvre du mécanisme de verrouillage.

Conformément à l'invention, ce résultat est obtenu au moyen d'une nacelle de moteur d'avion conforme à la revendication 1.

Selon un mode de réalisation préféré de l'invention, les moyens de butée escamotables comprennent au moins un organe de butée apte à être déplacé entre un état stable dans lequel l'un, mobile, desdits capots vient automatiquement en appui contre l'organe de butée lorsqu'il se déplace de sa position ouverte vers sa position fermée, et un état instable, dans lequel le déplacement du capot mobile jusqu'à sa position fermée est possible.

Avantageusement, des moyens élastiques sollicitent alors l'organe de butée vers son état stable.

L'organe de butée peut notamment être monté de façon à pouvoir pivoter autour d'un axe fixe, pour se déplacer de son état stable dans son état instable, et inversement.

Dans le cas particulier où les deux éléments sont mobiles, les moyens de butée escamotables comprennent deux organes de butée dont chacun est affecté à l'un des capots.

Les deux organes de butée peuvent alors être montés de façon à pouvoir pivoter autour d'un même axe fixe.

Avantageusement, les rebords des capots, aptes à être escamotés lorsque les capots sont en position fermée et à être apparents lorsqu'ils sont maintenus écartés par les moyens de butée escamotables, comportent des moyens aptes à en accroître la visibilité, tels que de la peinture fluorescente ou de couleur vive.

### Brève description des dessins

On décrira à présent, à titre d'exemple non limitatif, un mode de réalisation préféré de l'invention, en se référant aux dessins annexés, dans lesquels :
- la figure 1 est une vue en coupe transversale schématique d'une nacelle de moteur d'avion, au droit d'une paire de capots équipant celle-ci, et en regardant vers l'avant du moteur, un indicateur de défaut de fermeture conforme à l'invention étant interposé entre les extrémités basses des capots ;
- la figure 2 est une vue en coupe à plus grande échelle illustrant un mode de réalisation préféré d'un indicateur de défaut de fermeture conforme à l'invention, dans l'état qu'il occupe lorsque les capots sont en position basse de fermeture mais que les moyens de verrouillage n'ont pas été actionnés ;
- la figure 3 est une vue comparable à la figure 2, illustrant l'escamotage des moyens de butée équipant l'indicateur, pour la mise la mise en oeuvre des moyens de verrouillage ; et
- la figure 4 est une vue en coupe comparable aux figures 2 et 3, illustrant l'indicateur lorsque les moyens de verrouillage ont été actionnés.

### Description détaillée d'un mode de réalisation préféré de l'invention

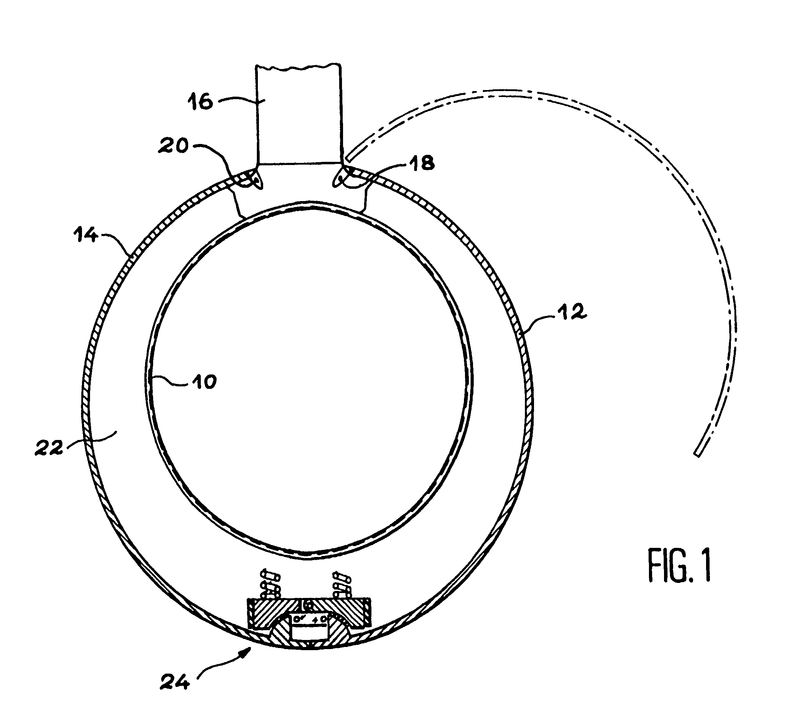

Comme l'illustre très schématiquement la figure 1, la nacelle d'un turboréacteur à double flux est habituellement délimitée vers l'intérieur, au droit de la soufflante (non représentée) par un carter de soufflante 10 et, vers l'extérieur, par deux capots 12 et 14, respectivement droit et gauche. Chacun des capots 12 et 14 présente sensiblement la forme d'un C ou d'un demi cercle, en section transversale selon un plan perpendiculaire à l'axe longitudinal du moteur.

Chacun des capots 12 et 14 est articulé, par son bord supérieur, sur un mât 16 par lequel le moteur est suspendu sous la voilure d'un avion. Plus précisément, le bord supérieur de chacun des capots 12 et 14 est relié au mât 16, à la partie supérieure du moteur, par une charnière respective 18, 20 dont l'axe est sensiblement parallèle à l'axe longitudinal du moteur. Comme on l'a représenté schématiquement en traits mixtes sur la figure 1 pour le capot droit 12, cet agencement permet de relever chacun des capots 12 et 14 afin d'accéder à différents équipements (non représentés) du moteur, implantés traditionnellement dans l'espace annulaire 22 délimité à l'intérieur de la nacelle entre le carter de soufflante 10 et les capots.

Lorsque les capots 12 et 14 occupent leur position fermée, illustrée en trait plein sur la figure 1, ils sont normalement verrouillés par des moyens de verrouillage (non représentés) tels que plusieurs mécanismes à genouillère, ou analogues, comparables au mécanisme décrit dans le document US-A-4 531 769, interposés entre les bords inférieurs des capots.

Afin d'éviter qu'un opérateur oublie d'actionner ces moyens de verrouillage ou les actionne de façon imparfaite, on interpose entre les bords inférieurs en vis-à-vis des capots 12 et 14 un indicateur de défaut de fermeture, désigné de façon générale par la référence 24.

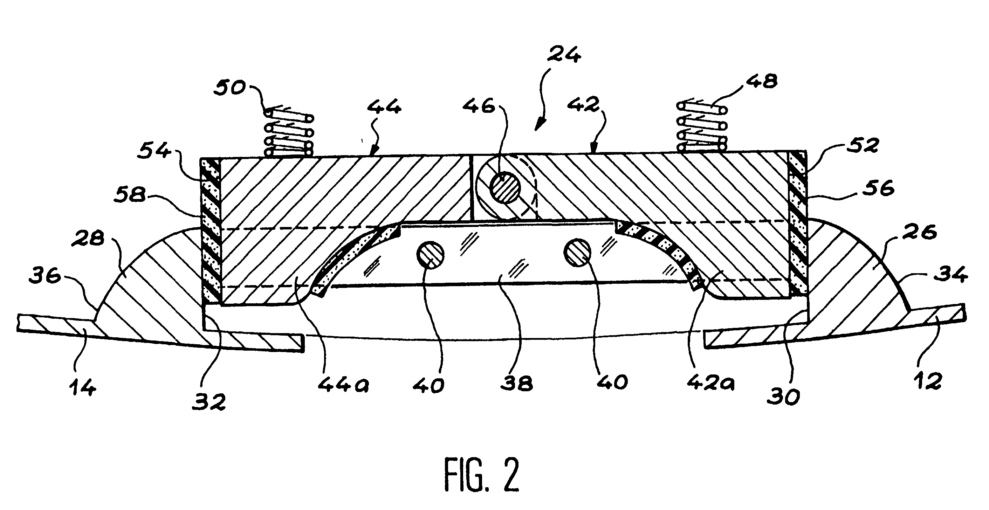

Un mode de réalisation préféré de cet indicateur de défaut de fermeture 24 va à présent être décrit en détail en se référant aux figures 2 à 4.

Sur ces figures 2 à 4, on voit que les bords inférieurs des capots 12 et 14 sont équipés intérieurement, à leur extrémité avant proche de l'entrée d'air de la nacelle, d'un ergot 26, 28 respectivement. Il est à noter que ces ergots 26 et 28 existent déjà, sous cette même forme, sur les capots des nacelles des moteurs existants.

Les faces 30 et 32 des ergots 26 et 28, tournées l'une vers l'autre lorsque les capots 12 et 14 sont en position fermée, sont planes. De plus, ces faces 30 et 32 sont sensiblement parallèles à un plan vertical médian passant par l'axe longitudinal du moteur, lorsque les capots sont en position fermée.

Par ailleurs, les faces opposées des ergots 26 et 28, désignées par les références 34 et 36 sur les figures 2 à 4, présentent des sections sensiblement en forme de quart de cercle, dont le centre est situé approximativement à l'intersection de la face plane 30, 32 correspondante avec la face intérieure du capot 12, 14 portant l'ergot considéré.

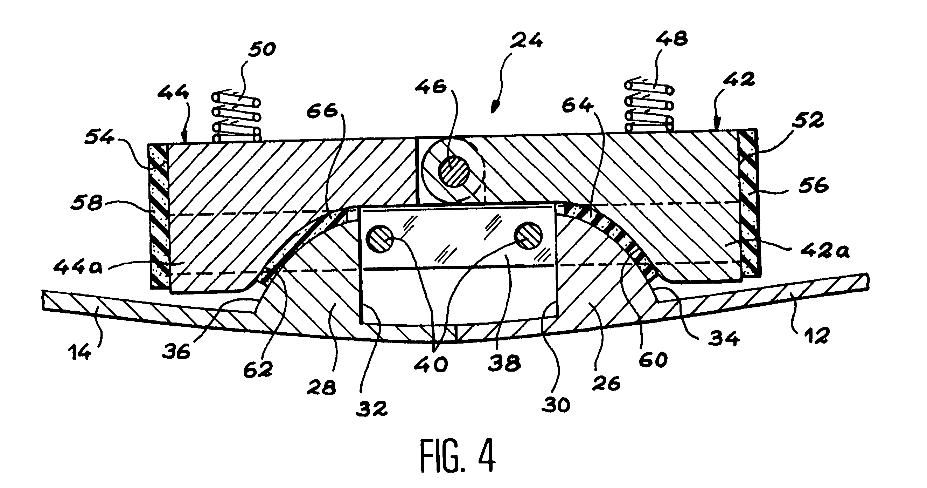

Sur les figures 2 à 4, on a également représenté un guide avant 38, fixé dans le bas de la face arrière de l'entrée d'air 39 de la nacelle. Ce guide avant 38 est relié, par des boulons 40, à une guide arrière (non représenté), de façon à délimiter entre les deux guides des interstices de droite et de gauche dans lesquels sont normalement reçus les ergots 26 et 28 lorsque les capots 12 et 14 sont en position fermée (figure 4).

Dans le mode de réalisation préféré de l'invention illustré sur les figures 2 à 4, l'indicateur de défaut de fermeture 24 est monté directement sur le guide avant 38 et tire profit de la présence des ergots 26 et 28 à proximité du bord inférieur de chacun des capots 12 et 14.

L'indicateur de défaut de fermeture 24 comprend dans ce cas deux organes de butée 42 et 44, respectivement de droite et de gauche, constituant des moyens de butée escamotables aptes à maintenir automatiquement les capots 12 et 14 écartés l'un de l'autre, lorsque ceux-ci se déplacent de leur position ouverte vers leur position fermée. De façon plus précise, les deux organes de butée 42 et 44 sont montés de façon pivotante sur le guide avant 38, par l'intermédiaire d'un axe commun 46 placé au-dessus du guide 38, dans le plan vertical médian du moteur passant par l'axe longitudinal de celui-ci, et orienté parallèlement audit axe.

Chacun des organes de butée 42 et 44 comprend une partie basse 42a, 44a susceptible de venir se placer dans l'interstice, formé entre le guide avant 38 et le guide arrière (non représenté), dans lequel sont reçus les ergots 26 et 28 lorsque les capots sont fermés. Les organes de butée 42 et 44 occupent alors une position basse, telle qu'illustré sur les figures 2 et 4. Cette position basse constitue une position stable, vers laquelle ils tendent à revenir sous l'action de la gravité et sous l'action de moyens élastiques tels que des ressorts 48 et 50 illustrés schématiquement sur les figures 2 et 4.

Lorsque les organes de butée 42 et 44 occupent cette position basse, ils s'étendent respectivement vers la droite et vers la gauche selon une direction sensiblement horizontale, de part et d'autre de leur axe de pivotement commun 46. Les faces d'extrémités 52 et 54 des organes 42 et 44, opposées à l'axe de pivotement 46, forment des faces de butée planes qui sont alors orientées parallèlement l'une à l'autre et au plan vertical médian passant par l'axe longitudinal du moteur.

Dans ces conditions, du fait que la partie inférieure 42a et 44a de chacun des organes de butée 42 et 44 pénètre alors dans l'interstice prévu pour recevoir les ergots 26 et 28, les faces planes 30 et 32 de ces ergots viennent automatiquement en appui contre les faces de butée 52 et 54 des organes 42 et 44 lors de la fermeture des capots 12 et 14. Cette situation est illustrée sur la figure 2. Elle se traduit par le fait qu'une partie du bord avant de chacun des capots 12 et 14 est alors clairement visible pour un observateur placé devant l'entrée d'air du moteur. L'observateur est donc immédiatement informé du fait que les mécanismes de verrouillage n'ont pas été actionnés. Un oubli de verrouillage des capots est, par conséquent, pratiquement impossible.

Cette indication peut être encore améliorée en plaçant sur les bords des capots qui dépassent alors de l'entrée d'air des moyens propres à augmenter leur visibilité, tels qu'une peinture fluorescente ou de couleur vive ou tout autre revêtement ou traitement susceptible d'attirer l'oeil d'un observateur même peu attentif.

Les organes de butée 42, 44 peuvent être réalisés en un matériau quelconque suffisamment résistant pour ne pas s'user trop rapidement au contact des ergots 26 et 28. A titre d'exemple nullement limitatif, ce matériau peut notamment être de l'acier inoxydable. Des pièces de protection 56 et 58, par exemple en caoutchouc, peuvent être rapportées sur les faces 52 et 54, ou éventuellement sur les faces de butée 30 et 32 des ergots 26 et 28, afin d'améliorer encore la résistance à l'usure.

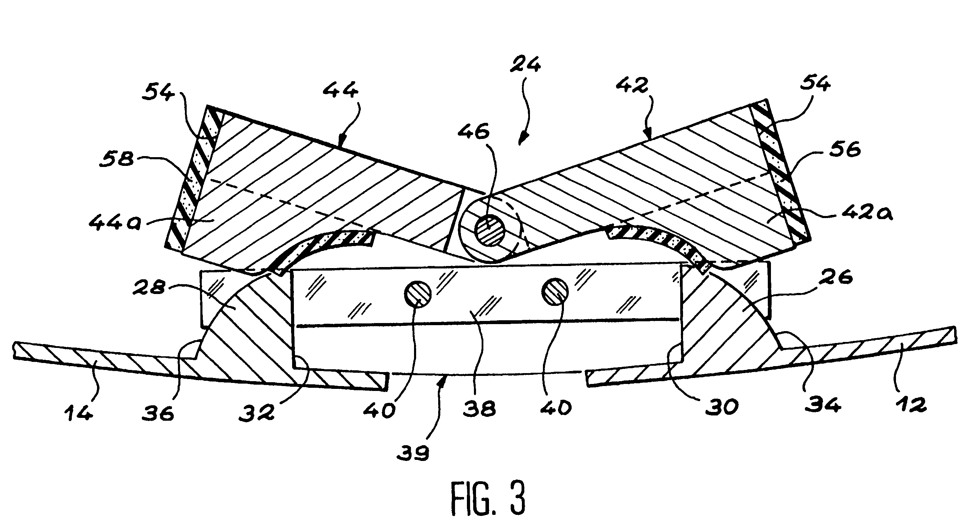

Lorsqu'un opérateur désire verrouiller les capots à l'aide des mécanismes de verrouillage qui équipent les rebords inférieurs de ceux-ci, il repousse vers le haut les organes de butée 42 et 44 à l'encontre des ressorts 48 et 50, dans une position instable illustrée la figure 3. Cette opération s'effectue sans difficulté particulière, par exemple à l'aide d'un outil.

Lorsque les organes de butée 42 et 44 ont pivoté suffisamment vers le haut autour de leur axe commun 46, les capots 12 et 14 peuvent terminer leur pivotement vers le bas autour de leurs charnières 18 et 20 (figure 1). En effet, les parties inférieures 42a et 44a des organes de butée 42 et 44 libèrent alors les interstices formés entre le guide avant 38 et le guide arrière (non représenté), de sorte que les ergots 26 et 28 pénètrent dans ces interstices. Simultanément, l'opérateur actionne les mécanismes de verrouillage (non représentés).

Comme l'illustre la figure 4, le bord inférieur de chacun des organes de butée 42 et 44 présente une partie en creux 60, 62, à section en arc de cercle dans laquelle vient automatiquement se loger l'ergot 26, 28 correspondant, sous l'effet d'un nouveau basculement vers le bas des organes de butée 42 et 44 commandé par les ressorts 48 et 50, lorsque les capots 12 et 14 sont fermés et verrouillés.

Des blocs de protection 64, 66, par exemple en caoutchouc peuvent également être rapportés dans les parties en creux 60 et 62 ou sur les surfaces 34 et 36 des ergots, afin d'éviter une usure trop rapide des différentes pièces.

L'ouverture des capots 12 et 14 s'effectue de façon habituelle, en déverrouillant les mécanismes de verrouillage, puis en écartant les bords inférieurs des capots, en les faisant pivoter autour des charnières 18 et 20 (figure 1). La coopération des faces 34 et 36 des ergots 26 et 28 avec les parties en creux 60 et 62 des organes de butée 42 et 44 a alors pour effet de faire pivoter ces derniers vers le haut, à l'encontre des ressorts de rappel 48 et 50. Dès que les ergots 26 et 28 ne sont plus en contact avec les organes de butée 42 et 44, ces derniers retombent dans leur position stable illustrée sur les figures 2 et 4. Ils empêchent alors automatiquement la fermeture complète des capots sans intervention extérieure, comme on l'a expliqué précédemment.

Il est à noter que l'indicateur selon l'invention peut être monté sur un moteur existant, comme sur un moteur neuf, sans qu'il soit nécessaire de modifier les capots, ni de rajouter de pièces. En effet, le guide avant habituel est simplement remplacé par le guide 38 portant les organes de butée 42, 44.

Bien entendu, le mode de réalisation décrit ne constitue qu'un exemple et peut subir de nombreuses modifications, sans sortir du cadre de l'invention, tel que défini par les revendications. Ainsi, même si l'invention est particulièrement adaptée au cas des capots de nacelle des moteurs d'avions, elle peut être utilisée dans de nombreuses autres applications, dès lors qu'il existe un risque d'oubli de verrouillage d'une porte en position fermée. Dans ce cas, les éléments à verrouiller peuvent comprendre un élément fixe et un élément mobile.

Par ailleurs, au lieu de pivoter sur un même axe, les organes de butée peuvent pivoter autour de deux axes distincts ou être remplacés par un ou deux organes aptes à coulisser verticalement entre une position haute, instable, et une position basse, stable. En outre, les moyens de rappel, constitués dans l'exemple décrit par des ressorts hélicoïdaux de compression, peuvent être remplacés par tous organes techniquement équivalents tels que des ressorts à lames.

## Revendications

1. Nacelle de moteur d'avion formée de deux capots (12, 14) montés de manière pivotante de manière à pouvoir occuper, l'un par rapport à l'autre, une position ouverte et une position fermée, la nacelle comportant en outre des moyens de verrouillage des deux capots (12, 14) en position fermée, ces moyens de verrouillage étant interposés entre les capots, et un indicateur de défaut de fermeture (24) des moyens de verrouillage, ledit indicateur étant **caractérisé en ce qu'**il comprend des moyens de butée (42, 44) aptes à maintenir automatiquement les deux capots (12, 14) écartés l'un de l'autre, lors d'un passage de la position ouverte vers la position fermée, et **en ce que** ces moyens de butée (42, 44) sont escamotables par une action volontaire d'un opérateur pour permettre le verrouillage des capots (12, 14) en position fermée.

2. Nacelle selon la revendication 1, dans laquelle les moyens de butée escamotables comprennent au moins un organe de butée (42, 44) apte à être déplacé entre un état stable dans lequel l'un, mobile, desdits capots (12, 14) vient automatiquement en appui contre ledit organe de butée lorsqu'il se déplace de sa position ouverte vers sa position fermée, et un état instable, dans lequel le déplacement dudit capot mobile (12, 14) jusqu'à sa position fermée est possible.

3. Nacelle selon la revendication 2, dans laquelle des moyens élastiques (48, 50) sollicitent ledit organe de butée (42, 44) vers son état stable.

4. Nacelle selon l'une quelconque des revendications 2 et 3, dans laquelle ledit organe de butée (42, 44) est apte à pivoter autour d'un axe fixe (46), pour se déplacer de son état stable dans son état instable, et inversement.

5. Nacelle selon l'une quelconque des revendications 2 à 4, dans laquelle lesdits capots (12, 14) sont tous deux mobiles et les moyens de butée escamotables comprennent deux organes de butée (42, 44) dont chacun est affecté à l'un desdits capots (12, 14).

6. Nacelle selon les revendications 4 et 5, combinées, dans lequel les deux organes de butée (42, 44) sont aptes à pivoter autour d'un même axe fixe (46).

7. Nacelle selon l'une quelconque des revendications précédentes, dans lequel des rebords des capots (12, 14), aptes à être escamotés lorsque les capots sont en position fermée et à être apparents lorsqu'ils sont maintenus écartés par les moyens de butée escamotables (42, 44), comportent des moyens aptes à en accroître la visibilité.

## Patentansprüche

1. Flugzeug-Triebwerkverkleidung, die aus zwei Hauben (12,14) gebildet ist, die auf dreh-/schwenkbare Weise angebracht sind, damit sie in Bezug aufeinander eine geöffnete Position und eine geschlossene Position einnehmen können, wobei die Verkleidung außerdem Verriegelungsmittel der beiden Hauben (12,14) in geschlossener Position aufweisen, wobei diese Verriegelungsmittel zwischen die Hauben eingefügt sind, sowie einen Schließfehleranzeiger (24) der Verriegelungsmittel, wobei der Anzeiger **dadurch gekennzeichnet ist, dass** er Anschlagmittel (42,44) umfasst, welche die beiden Hauben (12,14) beim Übergang von der geöffneten Position zur geschlossenen Position automatisch voneinander entfernt halten können, und dass diese Anschlagmittel (42,44) durch eine absichtliche Betätigung einer Bedienungsperson einziehbar sind, um die Verriegelung der Hauben (12,14) in geschlossener Position zu ermöglichen.

2. Verkleidung nach Anspruch 1, wobei die einziehbaren Anschlagmittel mindestens ein Anschlagelement (42,44) umfassen, das zwischen einem stabilen Zustand, bei dem eine, die bewegliche, der Hauben (12,14) automatisch gegen das Anschlagelement zur Anlage kommt, wenn sie sich aus ihrer geöffneten Position zu ihrer geschlossenen Position bewegt, und einem instabilen Zustand, in dem die Bewegung der beweglichen Haube (12,14) bis zur ihrer geschlossenen Position möglich ist, bewegt werden kann.

3. Verkleidung nach Anspruch 2, wobei elastische Mittel (48,50) das Anschlagelement (42,44) zu seinem stabilen Zustand hin vorbelasten.

4. Verkleidung nach einem der Ansprüche 2 oder 3, wobei das Anschlagelement (42,44) um eine feste Achse (46) drehen/schwenken kann, um sich aus seinem stabilen Zustand in seinen instabilen Zustand und umgekehrt zu bewegen.

5. Verkleidung nach einem der Ansprüche 2 bis 4, wobei die Hauben (12,14) beide beweglich sind und die einziehbaren Anschlagmittel zwei Anschlagelemente (42,44) umfassen, von denen jedes einer der Hauben (12,14) zugeordnet ist.

6. Verkleidung nach den Ansprüchen 4 und 5 in Kombination, wobei die beiden Anschlagelemente (42,44) sich um eine gleich, feststehende Achse (46) drehen/schwenken können.

7. Verkleidung nach einem der vorangehenden Ansprüche, wobei die Ränder der Hauben (12,14), die eingezogen werden können, wenn sich die Hauben in geschlossener Position befinden, und die freiliegen können, wenn sie durch die einziehbaren Anschlagmittel (42,44) auseinandergehalten werden, Mittel umfassen, welche deren Einsehbarkeit verbessern können.

## Claims

1. Pod for an aircraft engine formed from two cowls (12, 14) mounted so as to pivot in such a way as to be able to occupy, one with respect to the other, an open position and a closed position, the pod also having means for locking the two cowls (12, 14) in the closed position, said locking means being interposed between the cowls, and a closure fault indicator (24) for the locking means, said indicator being **characterized in that** it comprises abutment means (42, 44) able to automatically maintain the two cowls (12, 14) spaced from one another during a passage from the open position into the closed position, and **in that** said abutment means (42, 44) are retractable by a deliberate action on the part of an operator in order to permit the locking of the cowls (12, 14) in the closed position.

2. Pod according to claim 1, wherein the retractable abutment means comprise at least one abutment member (42, 44) which can be displaced between a stable state in which the mobile cowl of said two cowls (12, 14) automatically bears against said abutment member on moving from its open position into its closed position, and an unstable state in which the movement of said mobile cowl (12, 14) into its closed position is possible.

3. Pod according to claim 2, wherein elastic means urge said abutment member (42, 44) towards its stable state.

4. Pod according to either of the claims 2 and 3, wherein said abutment member (42, 44) is able to pivot about a fixed pin (46), so that it can move from its stable state into its unstable state and vice versa.

5. Pod according to any one of the claims 2 to 4, wherein both of the cowls (12, 14) are mobile and the retractable abutment means comprise two abutment members (42, 44), each being allocated to one of said cowls (12, 14).

6. Pod according to claims 4 and 5 combined, wherein the two abutment members (42, 44) can pivot about the same fixed pin (46).

7. Pod according to any one of the preceding claims, wherein the borders of the cowls (12, 14), which can be retracted when the cowls are in the closed position and which are visible when they are kept spaced by retractable abutment means (42, 44), incorporate means able to increase the visibility thereof.
